# EUROPEAN PATENT APPLICATION

(11) **EP 1 729 378 A1**
(43) Date of publication of application: **06.12.2006**
(21) Application number: 06011236.4
(22) Date of filing: 31.05.2006
(51) Int. Cl.: H01S 3/036

(54) **Gas laser apparatus**

(30) Priority: 02.06.2005 JP 2005163122
(71) Applicant: FANUC LTD, Minamitsuru-gun, Yamanashi 401-0597 (JP)
(72) Inventor: Sato, Takanori, Minamitsuru-gun Yamanashi 401-0511 (JP); Murakami, Takafumi, Minamitsuru-gun Yamanashi 401-0511 (JP); Egawa, Akira, Gotenba-shi Shizuoka 412-0043 (JP)
(74) Representative: Thum, Bernhard

(57) **Abstract**

A gas laser apparatus including a laser oscillating section including a medium circuit allowing a medium gas to flow therethrough under pressure, and a gas-composition adjusting section for adjusting the composition of the medium gas flowing through the medium circuit of the laser oscillating section. The gas-composition adjusting section comprising a gas supply section for supplying several types of medium gases having different compositions to the medium circuit of the laser oscillating section with a flow rate of each of the medium gases being adjustable; a gas exhaust section for exhausting the medium gas from the medium circuit of the laser oscillating section; and a control section for controlling the gas supply section and the gas exhaust section, to adjust the composition of the medium gas flowing through the medium circuit, in accordance with an oscillation condition including at least one of an attribute of an object matter acted on by a laser beam oscillated by the laser oscillating section and the accuracy of action of the laser beam.

## Description

### BACKGROUND OF THE INVENTION

### 1. Field of-the Invention

The present invention relates to a gas laser apparatus using gases as laser media.

### 2. Description of the Related Art

A gas laser apparatuses using gases as laser media is widely employed in the field of processing, medical care, measurement and so on. A laser oscillator constituting the gas laser apparatus generally includes an excitation section for exciting (by electrical discharge, light, heat, chemical reaction and the like) a flowable gas acting as a laser medium (referred to as a medium gas in this application); a light resonance section (having a pair of mirrors) for amplifying light energy of the medium gas excited by the excitation section and emitting the amplified light energy as a laser beam; a circulation path connected with the excitation section and the light oscillation section to form a medium circuit in which the medium gas flows under pressure; and a blower disposed in the circulation path to forcibly circulate the medium gas at high speed in the medium circuit.

In the above type of gas laser apparatus, the characteristics (or quality) of the oscillated laser beam are affected by various physical parameters, such as the curvature or reflectivity of the pair of mirrors constituting the light resonance section, the diameter of an electrical discharge tube or width of an electrode, as examples constituting the excitation section, the velocity or ripple conditions of the medium gas flowing in the medium circuit, and so on. In this connection, the conventional gas laser apparatus is generally provided with the above-described various parameters fixedly set in advance, in order to ensure that a laser beam having optimal characteristics (or quality) can be oscillated, which meets the attributes (material, size, etc.) of an object matter acted on by the laser beam and/or the required accuracy of action (e.g., accuracy of processing).

On the other hand, in the conventional gas laser apparatus, it is known that the type of oscillation is switched between a continuous wave (CW) type and a pulse type, so as to make it possible to oscillate the laser beam with characteristics suitably selected from different characteristics (see, e.g., Japanese Unexamined Patent Publication (Kokai) No.63-42188 (JP-A-63-42188)). The gas laser apparatus as set forth in JP-A-63-42188 includes, in addition to the laser oscillator having the conventional structure as described above, a medium-gas storage section for changing at least one of the flowing pressure and the composition of the medium gas flowing in the medium circuit. The medium-gas storage section includes a high pressure tank and a low pressure tank, both of which are connected to the medium circuit respectively through electromagnetic valves operating to open or close under the control of a control section. The high pressure tank and the low pressure tank respectively store a plurality of gaseous components (or component gases) constituting the medium gas (e.g., helium (He), nitrogen (N₂), carbon dioxide (CO₂)) at predetermined pressure and mixing ratio. When the oscillation type of the laser beam is switched between the continuous wave (CW) type and the pulse type, the control section controls to open the electromagnetic valve between the medium circuit and either one of the high pressure tank and the low pressure tank, so as to adjust at least one of the pressure and composition of the medium gas in the medium circuit to a condition suitable for the oscillation type selected from the continuous wave (CW) type and the pulse type.

In recent years, in the case of a laser processing or machining system using the gas laser apparatus, there has been increased demand for a speed-up of the cutting process of thin steel plates and the flatness of cut surfaces (i.e., reduced surface roughness). Further, in order to facilitate diversified small-quantity production, it is also required to use a single gas laser apparatus commonly for the machining of both thin steel plates and thick steel plates in an arbitrary order. Under these circumstances, it is necessary to appropriately adjust and optimize the characteristics (or quality) of a laser beam oscillated by a single gas laser apparatus, to meet changes in the attributes (material, size, etc.) of an objective workpiece and/or the required accuracy of machining.

For example, in order to perform high-speed cutting of thin steel plates, it is important to surely obtain sufficient energy density of a laser beam focused on a machining point, and therefore it is necessary to ensure that a laser beam superior in light-focusing characteristics can be oscillated at high power. Further, in order to perform high-speed cutting of thick steel plates, it is important to surely obtain an abrasion width for passing therethrough a sufficient volume of an assist gas, and therefore it is necessary to ensure that a laser beam with a relatively large light-focusing diameter can be oscillated at high power. In contrast, in order to perform high-precision cutting for obtaining flat cut surfaces, it is important to minimize a time-base fluctuation in the laser beam power and, to this end, it is necessary to reduce the formation of laminar flow and/or pulsation of the medium gas. However, the reduction in the formation of laminar flow and/or pulsation of the medium gas is contradictory to an increase in laser beam power.

In the conventional laser machining or processing system, in order to meet changes in the attributes (material, size, etc.) of an objective workpiece and/or the required accuracy of processing, various measures have been tried, such as switching the size of an aperture formed in the light resonance section to control a beam mode; allowing the surface curvature of a mirror disposed in a beam propagation path in the processing system to be modified; allowing a light-focusing lens disposed at a processing nozzle to be replaced to control the focal length and/or light-focusing diameter; controlling the flow rate of medium gas in the laser oscillator; providing a rectifier for reducing the pulsation of the medium gas to the laser oscillator. However, it has not been attempted conventionally to optimize the characteristics (or quality) of the laser beam by directly adjusting the composition of the medium gas as used, in response to changes in the attributes of the workpiece and/or the accuracy of processing.

From this point of view, the technique as set forth in JP-A-63-42188 described above is directed mainly to the switching of the oscillation type of the laser beam between the continuous wave (CW) type and the pulse type, and therefore it is difficult in the case of this technique to optimize the characteristics (or quality) of the laser beam so as to correspond flexibly to changes in the attributes of the workpiece and/or the accuracy of processing. In this connection, not only in the laser machining or processing system but also in other laser systems such as those for medical applications (e.g., diagnosis or treatment), it is desirable for the system to be able to correspond flexibly to changes in the attributes of an object matter (e.g., a skin) acted on by the laser beam and/or the required accuracy of action (e.g., incision) of the laser beam.

### SUMMARY OF THE INVENTION

It is an object of the present invention to provide a gas laser apparatus using gases as laser media, which can optimize the characteristics of a laser beam by directly adjusting the composition of a medium gas as used, in response to changes in the attributes of an object matter acted on by the laser beam and/or the required accuracy of action of the laser beam.

In order to accomplish the above object, the present invention provides a gas laser apparatus comprising a laser oscillating section including a medium circuit allowing a medium gas to flow therethrough under pressure; and a gas-composition adjusting section for adjusting the composition of the medium gas flowing through the medium circuit of the laser oscillating section; the gas-composition adjusting section comprising a gas supply section for supplying several types of medium gases having different compositions to the medium circuit of the laser oscillating section, with the flow rate of each of the medium gases being adjustable; a gas exhaust section for exhausting the medium gas from the medium circuit of the laser oscillating section; and a control section for controlling the gas supply section and the gas exhaust section, to adjust the composition of the medium gas flowing through the medium circuit, in accordance with an oscillation condition including at least one of an attribute of an object matter acted on by a laser beam oscillated by the laser oscillating section and the accuracy of action of the laser beam.

In the above gas laser apparatus, the control section may be configured such that it first controls the gas exhaust section to exhaust substantially the entire medium gas from the medium circuit, and thereafter controls the gas supply section to supply the medium circuit with the medium gas having an optimal composition obtained from the several types of medium gases in accordance with the oscillation condition.

Also, the control section may control the gas supply section and the gas exhaust section, based on a laser machining program including the oscillation condition.

The gas supply section may supply the medium circuit with the several types of medium gases, under the control of the control section, each of the several types of medium gases being composed of a plurality of component gases mixed in a predetermined ratio, or alternatively, may supply the medium circuit with at least one type of medium gas and at least one type of component gas, under the control of the control section, at least one type of medium gas being composed of a plurality of component gases mixed in a predetermined ratio.

The gas supply section may include a plurality of flow-rate adjusting elements for individually adjusting, under the control of the control section, the flow rates of the several types of medium gases supplied to the medium circuit.

The above gas laser apparatus may further comprise a pressure adjusting section disposed between the gas supply section and the medium circuit, for adjusting the supply pressure of the medium gas supplied from the gas supply section to the medium circuit. In this arrangement, the gas supply section is removably connected to the pressure adjusting section.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a functional block diagram showing a basic configuration of a gas laser apparatus according to the present invention;
Fig. 2 is an illustration showing a typical configuration of a gas laser apparatus according to a first embodiment of the present invention;
Fig. 3 is an illustration showing a typical configuration of a gas laser apparatus according to a second embodiment of the present invention; and
Fig. 4 is an illustration showing a typical configuration of a gas laser apparatus according to a third embodiment of the present invention.

### DETAILED DESCRIPTION

The embodiments of the present invention are described below in detail, with reference to the accompanying drawings. In the drawings, the same or similar components are denoted by common reference numerals.

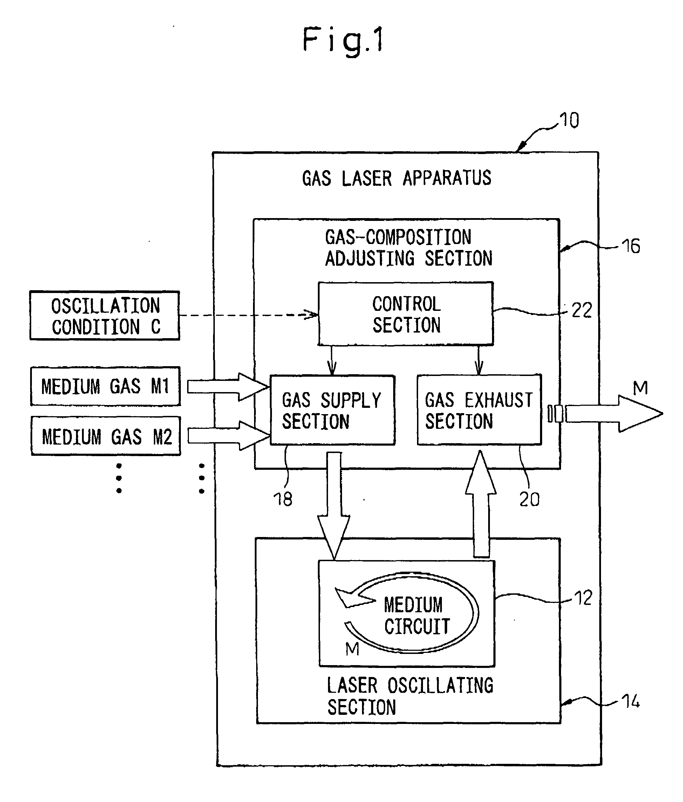

Referring to the drawings, Fig. 1 is a functional block diagram showing a basic configuration of a gas laser apparatus 10 according to the present invention. The gas laser apparatus 10 includes a laser oscillating section 14 provided with a medium circuit 12 allowing a medium gas M to flow therethrough under pressure; and a gas-composition adjusting section 16 for adjusting the composition of the medium gas M flowing through the medium circuit 12 of the laser oscillating section 14. The gas-composition adjusting section 16 includes a gas supply section 18 for supplying the medium circuit 12 of the laser oscillating section 14 with several types of medium gases M (Ml, M2, ...) having different compositions in a manner such that the flow rate of each of the medium gases is adjustable; a gas exhaust section 20 for exhausting the medium gas M from the medium circuit 12 of the laser oscillating section 14; and a control section 22 for controlling the gas supply section 18 and the gas exhaust section 20, to adjust the composition of the medium gas M flowing through the medium circuit 12, in accordance with an oscillation condition C including at least one of the attributes of an object matter acted on by a laser beam oscillated by the laser oscillating section 14 and the accuracy of action of the laser beam.

In the gas laser apparatus 10 configured as described above, during a period when an operation, such as laser processing, laser medical treatment and the like, is being performed, even if the attributes (material, dimensions, etc.) of the object matter (a workpiece, a skin, etc.) acted on by the laser beam and/or the required accuracy of action (accuracy of processing, incision, etc.) is changed, the control section 22 can control the gas supply section 18 and the gas exhaust section 20 in accordance with the oscillation condition C as changed, so as to adjust to optimize the composition of the medium gas M flowing through the medium circuit 12.

As the composition of the medium gas M is altered, the liquidity and refraction index of the medium gas M in the medium circuit 12 are modified, and thereby the excitation condition in the laser oscillating section 14 is modified. As a result, the mode number, beam propagation characteristics, time-base power fluctuations, etc. of the laser beam oscillated in the laser oscillating section 14 are modified, so that it is possible to optimize the characteristics (or quality) of the laser beam so as to flexibly correspond to changes in the attributes of the object matter to be acted on and/or the accuracy of action. Therefore, the gas laser apparatus 10 according to the present invention can perform a wide range of operations without changing its configuration.

In the configuration described above, under the control of the control section 22, the gas supply section 18 can adjust the flow rates of the several types of medium gases M1, M2, ... having different compositions, and thus can supply the medium circuit 12 with a medium gas having an optimal ratio of components suitable for the oscillation condition C. In this connection, it is advantageous to configure the control section 22 so that it first controls the gas exhaust section 20 to exhaust substantially the entire medium gas M from the medium circuit 12, and thereafter controls the gas supply section 18 to supply the medium circuit 12 with the medium gas having optimal composition obtained from the several types of medium gases M1, M2, ... in accordance with the above oscillation condition C. According to this configuration, along with the change of the oscillation condition C, the medium gas M flowing through the medium circuit 12 can be replaced substantially completely. Moreover, the required ratio of components of the medium gas M can be surely obtained only by the flow rate control in the gas supply section 18, and therefore the characteristics (or quality) of the laser beam can be optimized easily and accurately.

When the gas laser apparatus 10 described above is adopted in a laser machining or processing system, the control section 22 can be configured to control the gas supply section 18 and the gas exhaust section 20, based on a laser machining or processing program including the oscillation condition C. According to this configuration, the oscillation condition C may be prepared in advance as one of various machining or processing conditions to be described in the laser machining or processing program, so that optimal laser machining or processing can be performed timely according to the machining or processing program, in response to changes in the attributes of the workpiece and/or the machining or processing accuracy. In this arrangement, the control section 22 may be functionally incorporated into an operation control section of a laser processing apparatus (a robot, a machine tool, etc.) connected to the gas laser apparatus 10. If the control section 22 is also used as the operation control section of the laser processing apparatus, it is advantageous to adopt a numerical control program as the laser processing program. Alternatively, instead of using the processing program, an operator may arbitrarily actuate a mechanical switch to turn it on or off, so as to allow the control section 22 to control the gas supply section 18 and the gas exhaust section 20 according to the oscillation condition C.

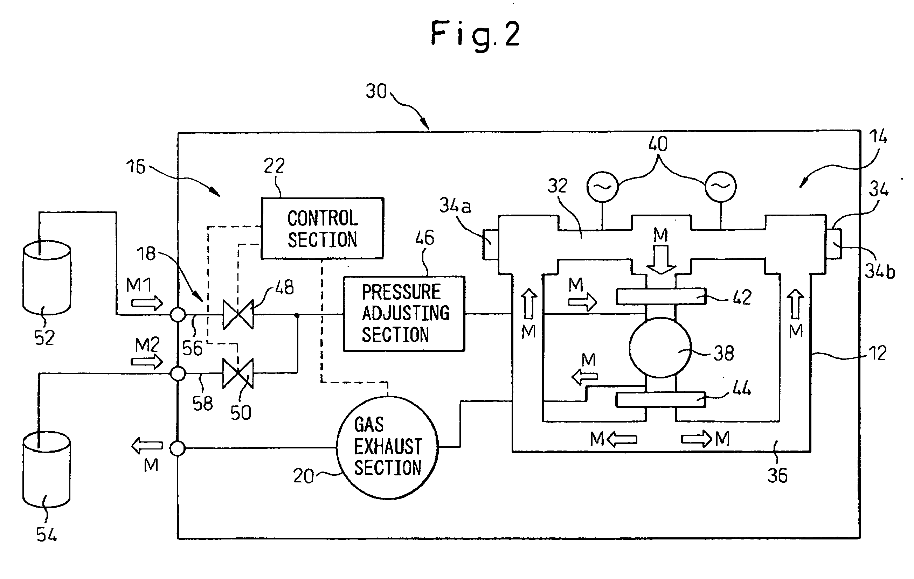

Fig. 2 shows a typical configuration of a gas laser apparatus 30 according to a first embodiment of the present invention, which has the above-described basic configuration. The essential components of the gas laser apparatus 30, corresponding to the basic components shown in Fig. 1, are designated by common reference numerals, and the description thereof will not be repeated.

A laser oscillating section 14 of the gas laser apparatus 30 includes an excitation section 32 for exciting a medium gas M; a light resonance section 34 for amplifying light energy of the medium gas M excited by the excitation section 32 and emitting the amplified light energy as a laser beam; a circulation path 36 connected to the excitation section 32 and the light resonance section 34 to form a medium circuit 12 in which the medium gas M flows under pressure; and a blower 38 disposed in the circulation path 36 to forcibly circulate the medium gas M at high speed in the medium circuit 12. The excitation section 32 is formed as an electric discharge tube provided with a pair of electrodes (not shown) connected to a pair of power supplies 40. A rear mirror (or a total reflection mirror) 34a and an output mirror (or a partial transmission mirror) 34b, constituting the light resonance section 34, are fixedly held at opposite axial ends of the excitation section 32 by respective holding mechanisms.

The pair of power supplies 40 of the excitation section 32 apply AC voltage in a radio frequency area to the corresponding electrodes. This typical oscillation operation is activated through a sequence control performed by a controller (not shown). When the power supplies 40 are activated to cause electrical discharge and thereby the medium gas M within the excitation section 32 is excited and the energy thereof is amplified in the light resonance section 34, a laser beam is emitted from the output mirror 34b. The medium gas M in the excitation section 32, having high temperature due to the electrical discharge, is cooled by a heat exchanger 42 disposed upstream of the blower 38 and thereafter inhaled by the blower 38. The blower 38 urges the medium gas M under pressure toward a discharge side. The medium gas M, the temperature thereof rising in this compression process, is cooled again by another heat exchanger 44 disposed downstream of the blower 38. The medium gas M discharged from the blower 38 and thus cooled flows through the circulation path 36, so as to be supplied to the excitation section 32.

The circulation path 36 constituting the medium circuit 12 of the laser oscillating section 14 is connected to the gas supply section 18 of the gas-composition adjusting section 16 through a pressure adjusting section 46. The pressure adjusting section 46 adjusts the pressure of the medium gas having an optional composition to a designated value and supplies the adjusted medium gas to the circulation path 36, so as to maintain the pressure of the medium gas M in the medium circuit 12 always at a constant value. Further, the gas exhaust section 20 of the gas-composition adjusting section 16, composed of, e.g., an exhaust pump, is connected to the circulation path 36 at a location separated from the pressure adjusting section 46. The gas exhaust section 20 acts to continuously exhaust a part of the medium gas M within the medium circuit 12 to the outside, independently of the gas composition adjustment step.

The gas supply section 18 of the gas-composition adjusting section 16 includes a pair of switching valves (i.e., flow-rate adjusting elements) 48, 50. The switching valves 48, 50 are connected respectively through flow paths 56, 58 to a pair of gas cylinders 52, 54, each storing one of two types of the medium gases M1, M2 having different compositions, so as to individually adjust the flow rates of the medium gases M1, M2 supplied to the medium circuit 12 under the control of the control section 22. Each of the two types of the medium gases M1, M2 stored in the gas cylinders 52, 54 is composed of a plurality of gaseous components (or component gases) mixed in a predetermined ratio. In the illustrated embodiment, the medium gas M1 composed of the component gases of a typical carbon dioxide gas laser (i.e., helium (He), nitrogen (N₂), carbon dioxide (CO₂)) in a normal mixing ratio and the medium gas M2 composed of the same component gases as those of the medium gas M1 in a different mixing ratio (with increased percentage of helium) are used by way of example.

In this connection, it has been found by experiment that, in the carbon dioxide gas laser oscillated through a high-speed axial-flow type laser oscillating section 14 described above, as the concentration of helium in the medium gas increases, a time-base fluctuation in a laser beam power is reduced and, as a result, for example, the cut surface of a workpiece becomes smooth. Also, it has been found that, under the condition where the curvatures of the rear mirror 34a and the output mirror 34b, constituting the light resonance section 34, are identical, as the concentration of helium in the medium gas increases, the mode number of the oscillated beam is reduced. On the other hand, as the concentration of helium increases, laser power tends to be saturated earlier than in the case of normal concentration, and therefore it tends to be difficult to efficiently obtain high power.

As the mode number of the beam is reduced, the spot diameter of a focal point where the laser beam is focused by a lens is also reduced. Energy density per unit area of the focal point is inversely proportional to the square of the spot diameter. Therefore, when a thin steel plate, for example, is cut, it is possible by reducing the spot diameter to decrease energy not contributing to the cutting, and thus to increase the cutting speed even with low power. In this manner, by substituting the medium gas M1 composed of the three types of gases mixed in the normal mixing ratio and accommodated in the medium circuit 12 of the laser oscillating section 14 with the medium gas M2 composed of the three types of gases with the increased concentration of helium, it is possible to appropriately carry out a high-precision cutting process (accompanying the improvement of roughness of a cut surface) in which the time-base fluctuation of the laser beam is required to be reduced, and a high-speed cutting process of a thin plate in which the laser beam at a lower mode number having superior light-focusing characteristics is required.

The operations of the essential components of the illustrated gas laser apparatus 30 will be described below, concerning a case where the laser machining program instructs that a typical processing (i.e., using the medium gas having a normal composition) be changed to a high-speed cutting of thin plate, in the latter case, great importance being attached to the quality of cut surfaces (in other words, a change in the oscillation condition C is instructed). In a normal state, the switching valve 48 is opened and the switching valve 50 is closed, in the gas supply section 18, under the control of the control section 22, so that the medium gas M1 having the normal ratio of components is supplied from the gas cylinder 52 to the medium circuit 12 of the laser oscillating section 14. In this state, the pressure adjusting section 46 and the gas exhaust section 20 operate such that the medium gas M1 within the medium circuit 12 is renewed little by little while maintaining a constant pressure.

The instant the laser machining program instructs a change in the oscillation condition C, the processing operation of the laser machining apparatus is first halted, and thereafter the electrical discharge in the excitation section 32 of the laser oscillating section 14 is stopped and the switching valve 48 of the gas supply section 18 is closed under the control of the control section 22 to suspend the supply of the medium gas M1. In this state, the gas exhaust section 20 continues an exhaust operation, under the control of the control section 22, so as to reduce the pressure within the medium circuit 12 from several thousand Pa (several dozens torr), at the moment the electrical discharge is stopped, to 133 Pa (1 torr) or less (in other words, so as to evacuate the medium circuit 12).

When the medium circuit 12 is completely evacuated, the switching valve 50 is opened, under the control of the control section 22, to supply the medium gas M2 containing helium with increased ratio of components into the medium circuit 12 through the pressure adjusting section 46. Then, after the pressure within the medium circuit 12 is stabilized by the operation of the pressure adjusting section 46, the electrical discharge in the excitation section 32 of the laser oscillating section 14 is restarted. As a result, the high-speed cutting process for a thin plate, to which great importance is attached to quality of cut surfaces, is started using a laser beam having optimal characteristics. In the operation flow described above, a time of only a few dozens of seconds is involved from stopping of electrical discharge to starting of the different-type processing.

In the above configuration, the gas supply section 18 of the gas-composition adjusting section 16 may be configured to select three or more types of medium gases, each of which is composed of a plurality of component gases mixed in a predetermined ratio, under the control of the control section 22, and to supply the selected gases to the medium circuit 12. In this case, three or more switching valves (i.e., flow-rate adjusting elements) are individually connected through respective flow paths to three or more gas cylinders respectively storing three or more types of medium gases. Then, at an instant, e.g., a laser machining program instructs to change the oscillation condition C, the individual switching valves operate to automatically select one type of medium gas having an optimal composition suitable for the changed oscillation condition C and to supply the selected medium gas to the medium circuit 12.

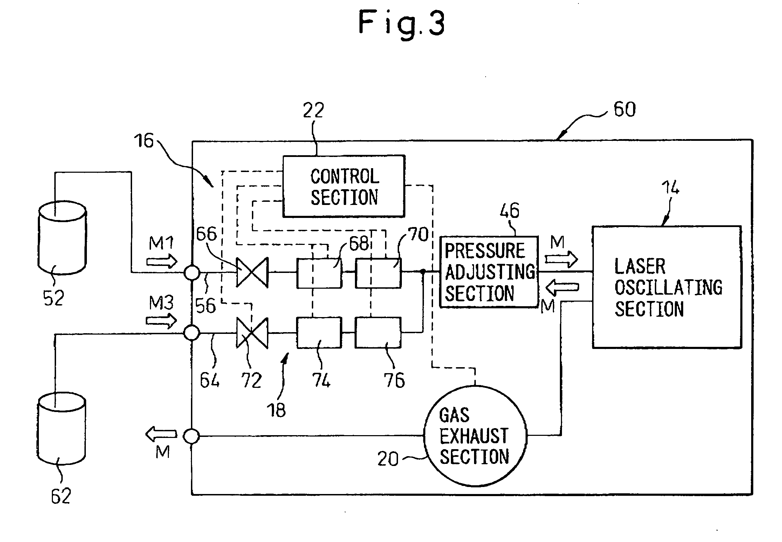

Fig. 3 typically shows a configuration of a gas laser apparatus 60 according to a second embodiment of the present invention, which has a basic configuration as shown in Fig. 1. The gas laser apparatus 60 has a configuration substantially identical to that of the gas laser apparatus 30 according to the first embodiment, except for the configuration of the gas supply section 18 of the gas-composition adjusting section 16, and therefore the corresponding essential components are designated by common reference numerals and the description thereof will not be repeated.

In the gas laser apparatus 60, the gas supply section 18 of the gas-composition adjusting section 16 includes two sets of flow-rate adjusting elements, each set being connected respectively through flow paths 56, 64 to a pair of gas cylinders 52, 62, each storing one of two types of the medium gases M1, M3 having different compositions. More specifically, the set of flow-rate adjusting elements provided for the medium gas M1 includes a gas blocking section 66, a pressure equalizing control section 68 and a flow-rate adjusting section 70, and these flow-rate adjusting elements are connected to the pressure control section 46 in series. On the other hand, the set of flow-rate adjusting elements provided for the medium gas M2 includes a gas blocking section 72, a pressure equalizing control section 74 and a flow-rate adjusting section 76, and these flow-rate adjusting elements are connected to the pressure control section 46 in series. The sets of flow-rate adjusting elements individually adjust the flow rates of the medium gases M1, M3 supplied to the medium circuit 12 under the control of the control section 22. More specifically, the pressure equalizing control sections 68, 74 control the pressures of the two types of medium gases M1, M3 at a mutually identical value, and thereafter the flow-rate adjusting sections 70, 76 adjust the flow rates of the medium gases M1, M3 as to be in a designated ratio of flow rates. As a result, the ratio of components in the composition of the medium gas M (i.e., a mixed gas made of the medium gases M1, M3) supplied to the laser oscillating section 14 is determined.

One of the two types of the medium gases M1, M3, respectively stored in the gas cylinders 52 and 62, is a gas composed of a plurality of component gases mixed in a predetermined ratio, and the other is a gas composed of a single component gas. In the illustrated embodiment, the medium gas M1 composed of the composition gases of a typical carbon dioxide gas laser (i.e., helium (He), nitrogen (N₂), carbon dioxide (CO₂)) in a normal mixing ratio and the medium gas M3 contains only one component gas, the type of which is identical to any one of the component gases contained in the medium gas M1 (helium, in the illustrated embodiment) are used by way of example.

The operations of the essential components of the illustrated gas laser apparatus 60 will be described below, concerning a case where the laser machining program instructs that a typical processing (i.e., using the medium gas having a normal composition) be changed to a high-speed cutting of thin plate, in the latter case, great importance being attached to the quality of cut surfaces (in other words, a change in the oscillation condition C is instructed). In a normal state, the gas blocking section 66 is opened and the gas blocking section 72 is closed, in the gas supply section 18, under the control of the control section 22, so that the medium gas M1 having the normal ratio of components is supplied from the gas cylinder 52 through the pressure equalizing control section 68 and the flow-rate adjusting section 70 to the medium circuit 12 of the laser oscillating section 14. In this state, the pressure adjusting section 46 and the gas exhaust section 20 operate such that the medium gas M1 within the medium circuit 12 is renewed little by little while maintaining a constant pressure.

The instant the laser machining program instructs to change the oscillation condition C, the processing operation of the laser machining apparatus is first halted, and thereafter the electrical discharge in the excitation section 32 (Fig. 2) of the laser oscillating section 14 is stopped and the gas blocking section 66 of the gas supply section 18 is closed under the control of the control section 22 to suspend the supply of the medium gas M1. In this state, the gas exhaust section 20 continues an exhaust operation, under the control of the control section 22, so as to reduce the pressure within the medium circuit 12 from several thousand Pa (several dozens torr), at the moment the electrical discharge is stopped, to 133 Pa (1 torr) or less (in other words, so as to evacuate the medium circuit 12).

When the medium circuit 12 is completely evacuated, both of the pair of gas blocking sections 66 and 72 are opened, under the control of the control section 22, to supply the medium gas M1 having the normal ratio of components and the medium gas M3 having the single component (i.e., helium), in a state mixed in the ratio of flow-rates determined by the pair of flow-rate adjusting sections 70, 76, into the medium circuit 12 through the pressure adjusting section 46. Then, after the pressure within the medium circuit 12 is stabilized by the operation of the pressure adjusting section 46, the electrical discharge in the excitation section 32 of the laser oscillating section 14 is restarted. As a result, the high-speed cutting process for a thin plate, to which great importance is attached to the quality of cut surfaces, is started using a laser beam having optimal characteristics. In the operation flow described above, a time of only a few dozens of seconds is involved from stopping of electrical discharge to starting of the different-type processing.

In the above configuration, the gas supply section 18 of the gas-composition adjusting section 16 may be configured to mix one medium gas composed of a plurality of component gases mixed in a predetermined ratio with the other two or more medium gases, each composed of a single component, in the designated ratio of flow-rates adjusted under the control of the control section 22, and to supply the medium gas, obtained by mixing, to the medium circuit 12. In this case, three or more sets of flow-rate adjusting elements (i.e., gas blocking sections, pressure equalizing control sections and flow-rate adjusting sections) are individually connected through respective flow paths to three or more gas cylinders respectively storing three or more types of medium gases. Then, at an instant, e.g., a laser machining program instructs changing of the oscillation condition C, the individual sets of flow-rate adjusting elements operate to generate, through mixing, a medium gas having an optimal composition suitable for the changed oscillation condition C and to supply the generated medium gas to the medium circuit 12.

Furthermore, in the above configuration, one medium gas composed of a plurality of component gases mixed in a predetermined ratio may be mixed with the other medium gas containing a single component gas, the type of which is different from those of the component gases essentially contained in the former medium gas, in a designated ratio of flow rates. For example, a medium gas composed of the mixed three types of gases, used for a typical carbon dioxide laser, may be mixed with a single component medium gas containing carbon monoxide, to prepare a medium gas composed of the mixed four types of gases, capable of oscillating a laser beam having different characteristics, which is then supplied to the medium circuit 12. Moreover, these several modifications can be combined with each other, to constitute a gas laser apparatus according to the present invention.

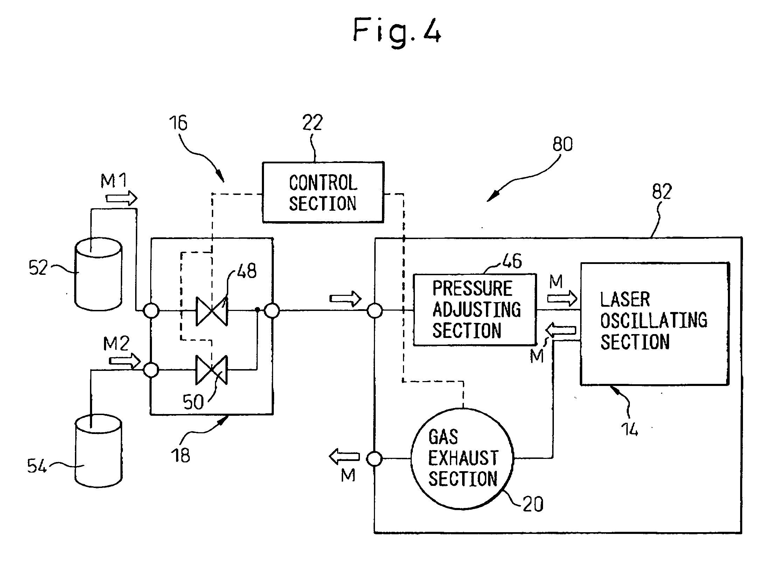

Fig. 4 typically shows a configuration of a gas laser apparatus 80 according to a third embodiment of the present invention, which has a basic configuration as shown in Fig. 1. The gas laser apparatus 80 has a configuration substantially identical to that of the gas laser apparatus 30 according to the first embodiment, except that the gas supply section 18 of the gas-composition adjusting section 16 is detachably attached to the laser oscillating section 14, and therefore the corresponding essential components are designated by common reference numerals and the description thereof will not be repeated.

In the gas laser apparatus 80, the laser oscillating section 14, the gas exhaust section 20 and the pressure adjusting section 46 are accommodated in a housing 82, and the gas supply section 18, accommodated in, e.g., another housing, is removably connected to the pressure adjusting section 46. According to this configuration, the gas supply section 18 having the characteristic configuration of the present invention can be provided to be connected, as an exterior unit having additional features, to a conventional gas laser apparatus not having a composition adjusting function for a medium gas (but including a laser oscillating section, a gas exhaust section and a pressure adjusting section). In this case, it is advisable to modify the software of the control section of the conventional gas laser apparatus, so as to act as the control section 22 of the present invention.

As will be apparent from the above description, according to the present invention, even when the attributes (materials, dimensions, etc.) of an object matter (a workpiece, a skin, etc.) acted on by a laser beam and/or the required accuracy of action (machining accuracy, incision accuracy, etc.) of the laser beam are changed, during a period when an operation such as a laser processing, a laser treatment, etc. is performed, it is possible for the control section to control the gas supply section and the gas exhaust section, in accordance with the oscillation condition as changed, so as to adjust to optimize the composition of a medium gas flowing through a medium circuit. As a result, it is possible to optimize the characteristics (or quality) of a laser beam, in response to changes in the attributes of the object matter and/or the required accuracy of action with significant flexibility.

While the invention has been described with reference to specific preferred embodiments, it will be understood by those skilled in the art that various changes and modifications may be made thereto without departing from the scope of the following claims. For example, any of the gas laser apparatuses 30, 60 and 80 according to the illustrated embodiments can be applied to a laser system other than the laser processing system, such as that for medical applications (e.g., diagnosis or treatment).

## Claims

1. A gas laser apparatus comprising a laser oscillating section (14) including a medium circuit (12) allowing a medium gas (M) to flow therethrough under pressure, and a gas-composition adjusting section (16) for adjusting a composition of the medium gas flowing through the medium circuit of the laser oscillating section, **characterized in that** said gas-composition adjusting section comprising:
a gas supply section (18) for supplying several types of medium gases (M1, M2, ...) having different compositions to said medium circuit of said laser oscillating section with a flow rate of each of the medium gases being adjustable;
a gas exhaust section (20) for exhausting the medium gas from said medium circuit of said laser oscillating section; and
a control section (22) for controlling said gas supply section and said gas exhaust section, to adjust the composition of the medium gas flowing through said medium circuit, in accordance with an oscillation condition (C) including at least one of an attribute of an object matter acted on by a laser beam oscillated by said laser oscillating section and an accuracy of action of the laser beam.

2. A gas laser apparatus as set forth in claim 1, wherein said control section first controls said gas exhaust section to exhaust substantially entire medium gas from said medium circuit, and thereafter controls said gas supply section to supply said medium circuit with the medium gas having optimal composition obtained from the several types of medium gases in accordance with said oscillation condition.

3. A gas laser apparatus as set forth in claim 1, wherein said control section controls said gas supply section and said gas exhaust section, based on a laser machining program including said oscillation condition.

4. A gas laser apparatus as set forth in claim 1, wherein said gas supply section supplies said medium circuit with the several types of medium gases, under a control of said control section, each of the several types of medium gases being composed of a plurality of component gases mixed in a predetermined ratio.

5. A gas laser apparatus as set forth in claim 1, wherein said gas supply section supplies said medium circuit with at least one type of medium gas and at least one type of component gas, under a control of said control section, at least one type of medium gas being composed of a plurality of component gases mixed in a predetermined ratio.

6. A gas laser apparatus as set forth in claim 5, wherein said at least one type of component gas is identical in type to a component gas previously included in said at least one type of medium gas.

7. A gas laser apparatus as set forth in claim 5, wherein said at least one type of component gas is different in type from a component gas previously included in said at least one type of medium gas.

8. A gas laser apparatus as set forth in any one of claims 1 to 7, wherein said gas supply section includes a plurality of flow-rate adjusting elements (48, 50) for individually adjusting, under a control of said control section, flow rates of the several types of medium gases supplied to said medium circuit.

9. A gas laser apparatus as set forth in any one of claims 1 to 7, further comprising a pressure adjusting section (46) disposed between said gas supply section and said medium circuit, for adjusting a supply pressure of the medium gas supplied from said gas supply section to said medium circuit; wherein said gas supply section is removably connected to said pressure adjusting section.
